# EUROPÄISCHE PATENTSCHRIFT

(11) **EP 3 292 999 B1**
(45) Veröffentlichungstag und Bekanntmachung des Hinweises auf die Patenterteilung: **18.03.2020**
(21) Anmeldenummer: 17185671.9
(22) Anmeldetag: 10.08.2017
(51) Int. Cl.: B32B 5/02, B32B 5/10, B32B 5/24, B32B 5/30, B32B 5/16, B32B 19/02, B32B 19/04, B32B 19/06, B32B 27/14

(54) **FLÄCHENGEBILDE, INSBESONDERE TEXTILES FLÄCHENGEBILDE**
FABRIC, IN PARTICULAR TEXTILE FABRIC
STRUCTURE PLATE, EN PARTICULIER STRUCTURE TEXTILE PLATE

(30) Priorität: 07.09.2016 DE 102016116735
(43) Veröffentlichungstag der Anmeldung: 14.03.2018
(73) Patentinhaber: Steidle, Michael, 72469 Meßstetten (DE)
(72) Erfinder: Steidle, Michael, 72469 Meßstetten (DE)
(74) Vertreter: Kohler Schmid Möbus Patentanwälte

(56) Entgegenhaltungen:
- EP-A2- 1 284 278
- CN-A- 105 647 339
- JP-A- H 028 052
- US-A1- 2006 181 600

## Beschreibung

### Neue Beschreibung:

Die Erfindung betrifft ein Flächengebilde, insbesondere ein textiles Flächengebilde mit einem flexiblen Substrat, auf das eine Vielzahl von plättchenförmigen Elementen aus einem abriebfesten und steiferen Material als das Substrat aufgebracht sind.

Solche textilen Flächengebilde sind beispielsweise aus der
WO 2012/024532 A1 oder der US 4,810,559 A bekannt. Diese Materialien sollen starken Beanspruchungen standhalten, insbesondere eine hohe Abriebfestigkeit aufweisen.

Insbesondere, wenn solche Flächengebilde als Oberflächenmaterialien, Sitzbezüge oder als Bekleidungsteile im industriellen Bereich verwendet werden, ergibt sich häufig die zusätzliche Anforderung, dass das Flächengebilde sich nicht statisch aufladen darf. Entladeströme von statischen Aufladungen einer Oberfläche, eines Sitzbezugs oder eines Bekleidungsteils können zur Zerstörung von empfindlichen Bauteilen führen. Auch Sensoreinrichtungen und Computer- und Steuerungsanlagen können durch Entladeströme oder elektrische Felder in ihrer Funktion gestört oder gar außer Betrieb gesetzt werden.

Die CN 105647339 A beschreibt eine leitfähige Beschichtung aus einem Epoxidharz, dem leitfähige Partikel wie Glimmer und kleingeschnittene Kohlefasern beigemengt werden. Weiter wird ein Kohlefaserfilz beschrieben, das eine solche Beschichtung aufweist.

Der vorliegenden Erfindung liegt daher die Aufgabe zugrunde, ein hoch abriebfestes Flächengebilde der eingangs genannten Art derart weiterzubilden, dass es auch in Umgebungen eingesetzt werden kann, die empfindlich auf Entladeströme statischer Aufladungen oder veränderliche elektrische Felder reagieren.

Die Aufgabe wird gelöst durch ein Flächengebilde mit den Merkmalen des Anspruchs 1.

Beim erfindungsgemäßen Flächengebilde erfüllen die auf das Substrat aufgebrachten Plättchen eine doppelte Funktion. Sie dienen zum einen der Erhöhung der Abriebfestigkeit und zum anderen der Ableitung von elektrischer Ladung. Das textile Flächengebilde kann damit in allen Bereichen technischer Textilien eingesetzt werden. Die Plättchen sind dabei als Erhebungen in Kreisform oder einer anderen geometrischen Grundform in Art einer Noppenstruktur ausgebildet.

Die Größe der Plättchen kann den Anforderungen an das Textil angepasst werden.

Dabei kann die elektrische Verbindung der Plättchen beispielsweise über eine leitfähige Beschichtung des Substrates erfolgen. Durch das Überziehen oder Beschichten des Substrats mit einem elektrisch leitfähigen Material erhält das Flächengebilde seine Grundleitfähigkeit. Die Beschichtung kann beispielsweise durch ein Aufdrucken oder durch eine Nassbeschichtung erfolgen. Als Beschichtungsmaterial kann beispielsweise eine Polyurethandispersion mit zugesetzten leitfähigen Farbpigmenten oder mit Rußpartikeln eingesetzt werden.

Alternativ kann die elektrische Verbindung der Plättchen über ein Substrat erfolgen, das unter Verwendung elektrisch leitfähiger Fäden hergestellt ist, wobei die Fäden auf der mit den Plättchen versehenen Seite des Substrats an der Oberfläche frei zugänglich und in geeigneten gegenseitigen Abständen angeordnet sind. Diese Fäden können vorzugsweise karbonhaltige Fäden sein.

Die leitfähigen Fäden können dabei in einem Gittermustermuster, vorzugsweise in einem Rautenmuster angeordnet sein. Auch Ringelmuster aus den leitfähigen Fäden sind einsetzbar, wobei der gegenseitige Abstand der parallel zueinander verlaufenden leitfähigen Fäden sehr gering sein kann. Vorzugsweise beträgt er nur 1 mm. Das Substrat kann dabei ein Gewebe, ein Gestrick, Gewirk, Vlies oder eine Folie sein. Bei der Herstellung des Substrats als Gestrick können die leitfähigen Fäden einfach im gewünschten Muster mit eingestrickt werden. Sie sorgen für die Ableitung der elektrischen Ladung zum Rand des Gestrickes. Die leitfähigen Plättchen, die später aufgebracht werden, verankern sich gut im Gestrick.

Gemäß verschiedener DIN-Normen wird elektrische Leitfähigkeit von Materialien je nach Anwendung unterschiedlich definiert. Materialien mit einem elektrischen Widerstand von 10⁶Ω bis 10¹¹ Ω werden als elektrostatisch ableitend bezeichnet. Materialien mit einem elektrischen Widerstand von < 10⁵ Ω gelten als elektrisch leitend. Das erfindungsgemäße textile Flächengebilde hat vorzugsweise einen elektrischen Widerstand der plättchenförmigen Elemente und/oder des Substrats von höchstens 1 kΩ. Damit kann das Flächengebilde sogar zur Stromleitung bspw. zur Versorgung von Heizdrähten oder LEDs eingesetzt werden.

Das Material für die plättchenförmigen Elemente und/oder für das Substrat kann Rußpartikel und/oder leitfähige Glimmerplättchen enthalten, um die elektrische Leitfähigkeit herzustellen. Glimmerplättchen können auch transparent sein, sodass bei ihrer Verwendung keine Grau- oder Schwarzfärbung des Materials wie bei Rußpartikeln stattfindet.

Das textile Flächengebilde kann jedoch auch, wie in der
DE 10 2014 112 408 A1 beschrieben, mit einem farbigen Motiv versehen sein, wobei die Farbe oder die Farben des Motivs die durch das Motiv überdeckten plättchenförmigen Elemente über ihre gesamte Höhe durchdringen und die Farbe oder die Farben für das Motiv Dispersionsfarbstoffe mit elektrisch leitfähigen Pigmenten sind.

Das Durchfärben der plättchenförmigen Elemente über ihre gesamte Höhe gewährleistet, dass das farbige Motiv dauerhaft auf dem Flächengebilde erhalten bleibt. Auch bei einem allmählichen Abrieb der plättchenförmigen Elemente ändert sich deren Farbe nicht. Auch die elektrische Leitfähigkeit bleibt aufgrund der leitfähigen Pigmente erhalten. Selbstverständlich kann auch das Substrat eingefärbt sein. Da dieses mechanisch jedoch durch die plättchenförmigen Elemente geschützt wird, ist ein Durchfärben auch des Substrats nicht notwendig. Insbesondere bei Flächengebilden mit sehr vielen und dicht angeordneten plättchenförmigen Elementen kann das Substrat auch aus einem Material in einer dunklen Farbe, vorzugsweise in Schwarz hergestellt werden. Mit dem Motiv sind dann nur die plättchenförmigen Elemente eingefärbt. Werden dagegen transparente Glimmerplättchen zur Herstellung der Leitfähigkeit für die plättchenförmigen Elemente und/oder das Substrat eingesetzt, so kann jeder gewünschte Farbton zur Herstellung des Motivs oder der Grundfarbe des Substrats erzielt werden.

Dabei kann zumindest ein Teil der plättchenförmigen Elemente über ihren Querschnitt mit in unterschiedlichen Farben eingefärbten Bereichen versehen sein. Linien und Grenzen von Farbfeldern im Motiv verlaufen dann nicht im Raster der plättchenförmigen Elemente, sondern quer durch diese hindurch, wodurch Flächengebilde auch mit sehr detaillierten Motiven in hoher Qualität möglich sind.

Bei einer bevorzugten Ausgestaltung kann das Material für die plättchenförmigen Elemente mindestens ein Latex-Material, einen Dispersionskleber auf Polyurethanbasis, verstärkende Füllstoffe und elektrisch leitfähige Partikel aufweisen.

Besonders vorteilhafte Ergebnisse haben sich ergeben, wenn der Anteil des Latex-Materials mindestens 20 %, der Anteil des Dispersionsklebers auf Polyurethanbasis mindestens 10 %, der Anteil an Füllstoffen mindestens 5 % und der Anteil an leitfähigen Partikeln mindestens 10 % des Materials für die plättchenförmigen Elemente betragen.

Weiter kann das Material für die plättchenförmigen Elemente einen Vernetzer sowie eine wässrige Styrol-Acrylat-Dispersion und/oder einen Azetylsäure-Ester-Copolymer aufweisen.

Die Füllstoffe können bevorzugt keramische Partikel und/oder Glaspartikel und/oder metallische Partikel sein, um die erforderliche Abriebfestigkeit zu erreichen.

Die Erfindung betrifft außerdem ein Verfahren zur Herstellung eines erfindungsgemäßen Flächengebildes, das gekennzeichnet ist durch die Schritte:
- Auftragen von plättchenförmigen Elementen aus einem abriebfesten Material auf ein flächiges elektrisch leitfähiges Substrat durch ein Schablonendruckverfahren;
- Auftragen eines Motivs mit Dispersionsfarbstoffen mit elektrisch leitfähigen Pigmenten auf einen flexiblen Träger mithilfe einer Kunststoffdispersion;
- Auflegen des Trägers auf das Substrat mit den plättchenförmigen Elementen und Verpressen mit diesem unter Hitzeeinwirkung, bis die durch das Motiv überdeckten plättchenförmigen Elemente durchgefärbt sind.

Auf den flexiblen Träger lassen sich beliebige Motive in einer beliebigen Farbkombination aufbringen. Beim Verpressen des Trägers mit dem vorzugsweise textilen Substrat unter Hitzeeinwirkung diffundieren die auf dem Träger befindlichen Farbstoffe mit den elektrisch leitfähigen Pigmenten in das Material der plättchenförmigen Elemente hinein. Wird dieser Vorgang ausreichend lange durchgeführt, können die plättchenförmigen Elemente über ihre gesamte Höhe durchgefärbt und damit auch einheitlich leitfähig gemacht werden. Die Bereiche außerhalb des Motivs werden mit einer kontrastierenden Grundfarbe mit leitfähigen Farbpigmenten eingefärbt, wobei diese Grundfarbe ebenfalls auf den Träger aufgebracht werden kann, oder sie werden mit Rußpartikeln oder leitfähigen Glimmerplättchen durchsetzt, sodass alle plättchenförmigen Elemente eine zumindest ähnliche Leitfähigkeit aufweisen.

Durch die Einwirkung von Hitze nehmen die Farbstoffe einen dampf- oder gasförmigen Zustand an, der das Hineindiffundieren in die plättchenförmigen Elemente erleichtert. Bei Auswahl geeigneter Farbstoffe sowie geeigneter Materialien für die plättchenförmigen Elemente verbinden sich die Farbstoffe dauerhaft mit dem Material der plättchenförmigen Elemente.

Als Träger kann dabei vorzugsweise eine silikonierte Kunststofffolie eingesetzt werden.

Vorzugsweise wird der Druckvorgang bei einer Temperatur kleiner als 200 °C durchgeführt, um die verwendeten Materialien thermisch nicht zu schädigen.

## Patentansprüche

1. Flächengebilde, insbesondere textiles Flächengebilde, mit einem flexiblen Substrat, auf das eine Vielzahl von plättchenförmigen Elementen aus einem abriebfesten und steiferen Material als das Substrat aufgebracht sind, **dadurch gekennzeichnet, dass** die Plättchen als Erhebungen in Kreisform oder einer anderen geometrischen Grundform in Art einer Noppenstruktur ausgebildet, mit einem elektrisch leitfähigen Material durchsetzt und elektrisch leitfähig miteinander verbunden sind.

2. Flächengebilde nach Anspruch 1, **dadurch gekennzeichnet, dass** die elektrische Verbindung der Plättchen über eine leitfähige Beschichtung des Substrates erfolgt.

3. Flächengebilde nach Anspruch 1, **dadurch gekennzeichnet, dass** die elektrische Verbindung der Plättchen über ein Substrat erfolgt, das unter Verwendung elektrisch leitfähiger Fäden hergestellt ist, wobei die Fäden auf der mit den Plättchen versehenen Seite des Substrats an der Oberfläche frei zugänglich sind.

4. Flächengebilde nach Anspruch 3, **dadurch gekennzeichnet, dass** die Fäden karbonhaltige Fäden sind.

5. Flächengebilde nach Anspruch 3 oder 4, **dadurch gekennzeichnet, dass** die Fäden in einem Gittermustermuster, vorzugsweise in einem Rautenmuster angeordnet sind.

6. Flächengebilde nach einem der vorhergehenden Ansprüche, **dadurch gekennzeichnet, dass** der elektrische Widerstand der plättchenförmigen Elemente und/oder des Substrats höchstens 1 kQ beträgt.

7. Flächengebilde nach einem der vorhergehenden Ansprüche, **dadurch gekennzeichnet, dass** das Material für die plättchenförmigen Elemente und/oder für das Substrat Rußpartikel und/oder leitfähige Glimmerplättchen enthält.

8. Flächengebilde nach einem der vorhergehenden Ansprüche, **dadurch gekennzeichnet, dass** es mit einem farbigen Motiv versehen ist, wobei die Farbe oder die Farben des Motivs die durch das Motiv überdeckten plättchenförmigen Elemente über ihre gesamte Höhe durchdringen und die Farbe oder die Farben für das Motiv Dispersionsfarbstoffe mit elektrisch leitfähigen Pigmenten sind.

9. Flächengebilde nach Anspruch 8, **dadurch gekennzeichnet, dass** zumindest ein Teil der plättchenförmigen Elemente über ihren Querschnitt mit in unterschiedlichen Farben eingefärbten Bereichen versehen ist.

10. Flächengebilde nach einem der vorhergehenden Ansprüche, **dadurch gekennzeichnet, dass** das Material für die plättchenförmigen Elemente mindestens ein Latex-Material, einen Dispersionskleber auf Polyurethanbasis, verstärkende Füllstoffe und elektrisch leitfähige Partikel aufweist.

11. Flächengebilde nach Anspruch 10, **dadurch gekennzeichnet, dass** der Anteil des Latex-Materials mindestens 20 %, der Anteil des Dispersionsklebers auf Polyurethanbasis mindestens 10 %, der Anteil an Füllstoffen mindestens 5 % und der Anteil an leitfähigen Partikeln mindestens 10 % des Materials für die plättchenförmigen Elemente betragen.

12. Flächengebilde nach einem der Ansprüche 10 oder 11, **dadurch gekennzeichnet, dass** die Füllstoffe keramische Partikel und/oder Glaspartikel und/oder metallische Partikel sind.

13. Verfahren zur Herstellung eines Flächengebildes nach einem der Ansprüche 1 bis 12, **gekennzeichnet durch** die Schritte:
- Auftragen von plättchenförmigen Elementen aus einem abriebfesten Material auf ein flächiges elektrisch leitfähiges Substrat durch ein Schablonendruckverfahren;
- Auftragen eines Motivs mit Dispersionsfarbstoffen mit elektrisch leitfähigen Pigmenten auf einen flexiblen Träger mithilfe einer Kunststoffdispersion;
- Auflegen des Trägers auf das Substrat mit den plättchenförmigen Elementen und Verpressen mit diesem unter Hitzeeinwirkung, bis die durch das Motiv überdeckten plättchenförmigen Elemente durchgefärbt sind.

14. Verfahren nach Anspruch 13, **dadurch gekennzeichnet, dass** als Träger eine silikonierte Kunststofffolie eingesetzt wird.

15. Verfahren nach Anspruch 13 oder 14, **dadurch gekennzeichnet, dass** der Druckvorgang bei einer Temperatur kleiner als 200 °C durchgeführt wird.

## Claims

1. Fabric, particularly textile fabric, with a flexible substrate, to which a plurality of platelet-shaped elements made of a wear-resistant material that is stiffer than the substrate are applied, **characterised in that** the platelets are made as elevations in a circular shape or another basic geometric shape in a kind of nap structure, interspersed with an electrically conductive material, and are connected to each other in an electrically conductive way.

2. Fabric according to claim 1, **characterised in that** the electrical connection of the platelets is made through a conductive coating of the substrate.

3. Fabric according to claim 1, **characterised in that** the electrical connection of the platelets is made through a substrate, which is produced using electrically conductive threads, in which the threads are freely accessible at the surface on the side of the substrate provided with the platelets.

4. Fabric according to claim 3, **characterised in that** the threads are threads that contain carbon.

5. Fabric according to claim 3 or 4, **characterised in that** the threads are arranged in a grid pattern, preferably in a diamond pattern.

6. Fabric according to one of the previous claims, **characterised in that** the electrical resistance of the platelet-shaped elements and/or the substrate is 1 kΩ at most.

7. Fabric according to one of the previous claims, **characterised in that** the material for the platelet-shaped elements and/or for the substrate contains soot particles and/or conductive mica platelets.

8. Fabric according to one of the previous claims, **characterised in that** it is provided with a coloured motif, in which the dye or dyes of the motif penetrate the platelet-shaped elements covered by the motif over their whole height and the dye or dyes for the motif are dispersion dyes with electrically conductive pigments.

9. Fabric according to claim 8, **characterised in that** at least a part of the platelet-shaped elements is provided with areas that are dyed in different colours over their cross-section.

10. Fabric according to one of the previous claims, **characterised in that** the material for the platelet-shaped elements has at least a latex material, a dispersion adhesive based on polyurethane, reinforcing fillers and electrically conductive particles.

11. Fabric according to claim 10, **characterised in that** the proportion of latex material is at least 20%, the proportion of dispersion adhesive based on polyurethane is at least 10%, the proportion of fillers is at least 5% and the proportion of conductive particles is at least 10% of the material for the platelet-shaped elements.

12. Fabric according to one of claims 10 or 11, **characterised in that** the fillers are ceramic particles and/or glass particles and/or metallic particles.

13. Method for producing a fabric according to one of claims 1 to 12, **characterised by** the steps:
- Applying platelet-shaped elements made of a wear-resistant material to a flat, electrically conductive substrate by a stencil printing process;
- Applying a motif with dispersion dyes with electrically conductive pigments to a flexible carrier using a plastic dispersion;
- Applying the carrier to the substrate with the platelet-shaped elements and pressing with this under the effect of heat until the platelet-shaped elements covered by the motif are dyed through.

14. Method according to claim 13, **characterised in that** a siliconised plastic film is used as carrier.

15. Method according to claim 13 or 14, **characterised in that** the printing process is carried out at a temperature of less than 200° C.

## Revendications

1. Structure plane, en particulier structure plane textile, avec un substrat flexible, sur lequel sont appliqués une pluralité d'éléments en forme de plaquettes composés d'un matériau résistant à l'abrasion et plus rigide que le substrat, **caractérisée en ce que** les plaquettes sont réalisées en tant que bossages en forme de cercle ou d'une autre forme de base géométrique à la façon d'une structure à picots, chargées d'un matériau électro-conducteur et reliées électriquement les unes aux autres.

2. Structure plane selon la revendication 1, **caractérisée en ce que** la liaison électrique des plaquettes s'effectue par l'intermédiaire d'un revêtement conducteur du substrat.

3. Structure plane selon la revendication 1, **caractérisée en ce que** la liaison électrique des plaquettes s'effectue par l'intermédiaire d'un substrat, qui est fabriqué au moyen de fils électro-conducteurs, dans lequel les fils sur la face du substrat pourvue des plaquettes sont librement accessibles à la surface.

4. Structure plane selon la revendication 3, **caractérisée en ce que** les fils sont des fils contenant du carbone.

5. Structure plane selon la revendication 3 ou 4, **caractérisée en ce que** les fils sont disposés dans un motif de treillis, de préférence dans un motif à losanges.

6. Structure plane selon l'une quelconque des revendications précédentes, **caractérisée en ce que** la résistance électrique des éléments en forme de plaquettes et/ou du substrat atteint au maximum 1 kΩ.

7. Structure plane selon l'une quelconque des revendications précédentes, **caractérisée en ce que** le matériau pour les éléments en forme de plaquettes et/ou pour le substrat contient des particules de suie et/ou des plaquettes de mica conductrices.

8. Structure plane selon l'une quelconque des revendications précédentes, **caractérisée en ce qu'**elle est pourvue d'un motif de couleur, dans lequel la couleur ou les couleurs du motif imprègnent les éléments en forme de plaquettes, recouverts par le motif, sur toute leur hauteur et la couleur ou les couleurs pour le motif sont des colorants en dispersion avec des pigments électro-conducteurs.

9. Structure plane selon la revendication 8, **caractérisée en ce qu'**au moins une partie des éléments en forme de plaquettes est pourvue sur leur section transversale de zones encrées dans différentes couleurs.

10. Structure plane selon l'une quelconque des revendications précédentes, **caractérisée en ce que** le matériau pour les éléments en forme de plaquettes présente au moins un matériau en latex, une colle en dispersion à base de polyuréthane, des charges renforçantes et des particules électro-conductrices.

11. Structure plane selon la revendication 10, **caractérisée en ce que** le pourcentage du matériau latex atteint au moins 20 %, le pourcentage de la colle en dispersion à base de polyuréthane au moins 10 %, le pourcentage de charges au moins 5 % et le pourcentage de particules conductrices au moins 10 % du matériau pour les éléments en forme de plaquettes.

12. Structure plane selon l'une quelconque des revendications 10 ou 11, **caractérisée en ce que** les charges sont des particules céramiques et/ou des particules de verre et/ou des particules métalliques.

13. Procédé de fabrication d'une structure plane selon l'une quelconque des revendications 1 à 12, **caractérisé par** les étapes :
- d'application d'éléments en forme de plaquettes composés d'un matériau résistant à l'abrasion sur un substrat électro-conducteur plan par un procédé de sérigraphie ;
- d'application d'un motif avec des colorants en dispersion avec des pigments électro-conducteurs sur un support flexible à l'aide d'une dispersion de matière synthétique ;
- de pose du support sur le substrat avec les éléments en forme de plaquettes et de pression avec celui-ci sous l'effet de chaleur, jusqu'à ce que les éléments en forme de plaquettes recouverts par le motif soient encrés.

14. Procédé selon la revendication 13, **caractérisé en ce qu'**une feuille de plastique siliconée est utilisée comme support.

15. Procédé selon la revendication 13 ou 14, **caractérisé en ce que** le processus d'impression est exécuté à une température inférieure à 200°C.
